# EUROPEAN PATENT SPECIFICATION

(11) **EP 3 437 943 B1**
(45) Date of publication and mention of the grant of the patent: **08.09.2021**
(21) Application number: 18185851.5
(22) Date of filing: 26.07.2018
(51) Int. Cl.: B60T 7/10, B60T 7/02, B60T 7/08

(54) **ARRANGEMENT FOR A BRAKE CONTROL LEVER OR CONTROL LEVER OF A POWER TAKE-OFF CONNECTION**
ANORDNUNG FÜR BREMSHEBEL ODER FÜR POWER TAKE-OFF VERBINDUNG
DISPOSITIF DE LEVIER DE FREIN OU DE CONNECTION POUR POWER TAKE-OFF

(30) Priority: 03.08.2017 IT 201700089498
(43) Date of publication of application: 06.02.2019
(73) Proprietor: FINAN.CO. S.r.l, 20871 Vimercate (MB) (IT)
(72) Inventor: BARBIERI, Walter, 24040 Filago (BG) (IT)
(74) Representative: Franco Martegani S.r.l.

(56) References cited:
- WO-A1-92/08628
- WO-A1-2009/127047
- DE-A1-102005 057 036
- DE-C1- 19 534 438
- DE-C1- 19 957 749
- FR-A1- 2 768 679
- GB-A- 2 196 416
- JP-A- H05 270 367
- US-A- 3 310 995
- US-A- 5 159 850

## Description

The present invention relates to an arrangement for a brake control lever or control lever of a power take-off connection.

Various control lever arrangements have so far been used for both the control of a hand brake and also for the control of a power take-off (PTO) connection.

In both cases, attempts have always been made to improve or optimize the positioning of the parts of these control arrangements such as, for example, the operating or control lever, its pivot point, control lever support, cable connection to the lever, cable sheath connection, etc.

In these known applications, it has been shown that in order to have a good action of the brake and a good engagement of the power take-off there must be a complete rotation of the control lever for relevant angles.

The known progressive lever systems of the parallelogram, cam or multilink type, for example, have a fixed ratio variation according to the angle of the control lever. The above, however, does not always allow the required effect to be obtained, especially if the cable is under tension or has slackened.

WO 2009/127047 relates to a self-adjusting mechanism for a parking brake assembly.

DE 19957749 relates to a clearance compensation arrangement for a cable-operated parking brake.

DE 1020050570 36 describes a brake control lever arrangement according to the preamble of claim 1.

The general objective of the present invention is therefore to provide an arrangement for a brake control lever or control lever of a power take-off connection capable of solving the drawbacks of the known art indicated above in an extremely simple, economical and particularly functional manner.

A further objective of the present invention is to provide an arrangement for a brake control lever or control lever of a power take-off connection that always enables there to be the correct pulling effect required regardless of whether the cable is under tension or has slackened.

The above objectives are achieved by an arrangement for a brake control lever or control lever of a power take-off connection produced according to the independent claim 1 and the following sub-claims.

The structural and functional characteristics of the present invention and its advantages with respect to the known art will appear even more evident from the following description, referring to the attached schematic drawings which show an embodiment example of the invention itself. In the drawings:

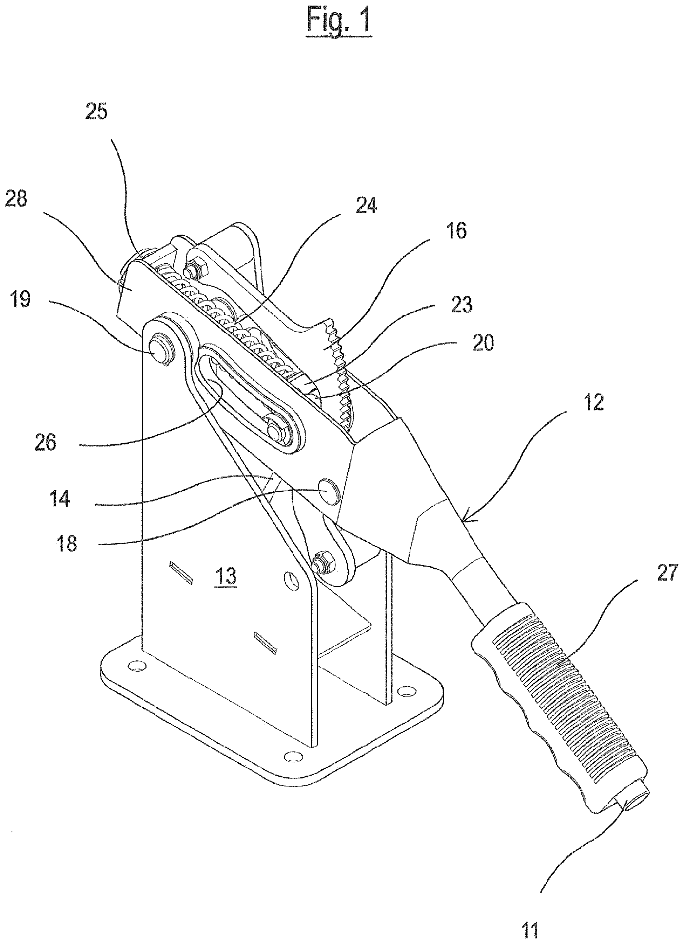

- figure 1 is a perspective view illustrating an arrangement for a brake control lever or control lever of a power take-off connection according to the present invention in a rest position;
- figures 2, 3 and 4 are raised side views showing, in dots and dashes, hidden internal parts of the control lever of figure 1 in three different actuating positions;

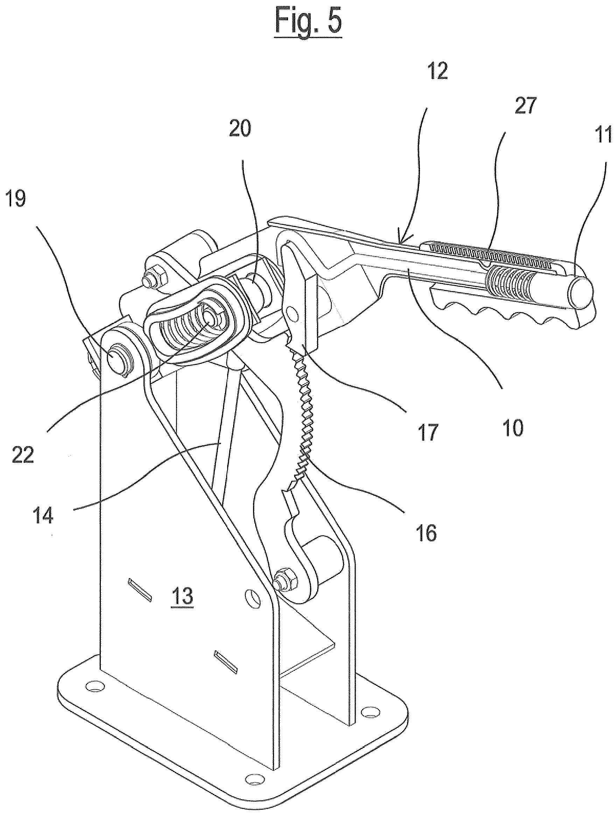

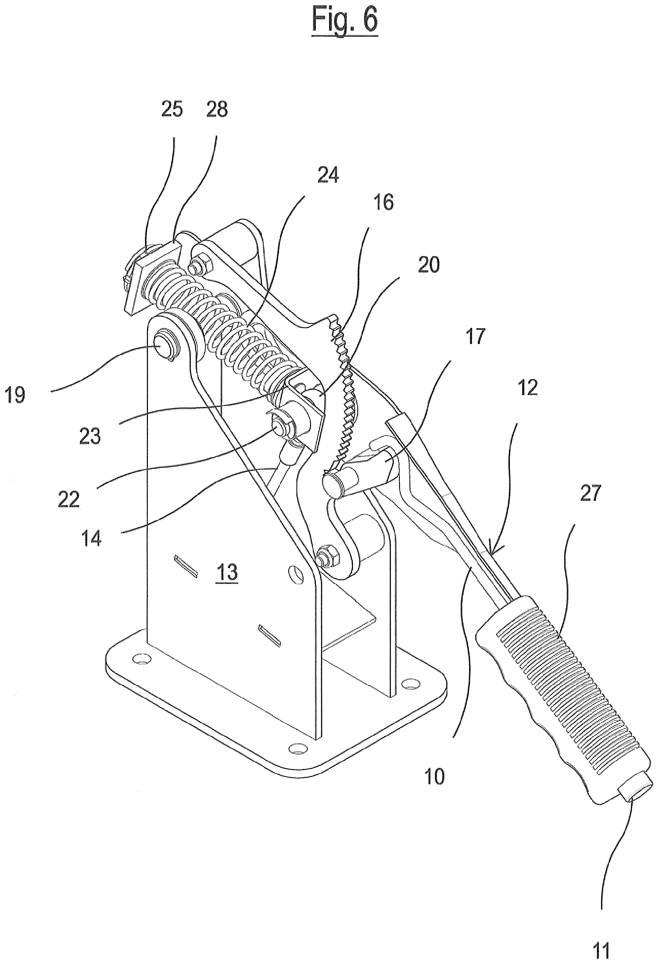

- figures 5 and 6 are perspective views illustrating the arrangement for a brake control lever or control lever of a power take-off connection according to the invention of figure 1 in a rest position with parts removed or split at different depths;

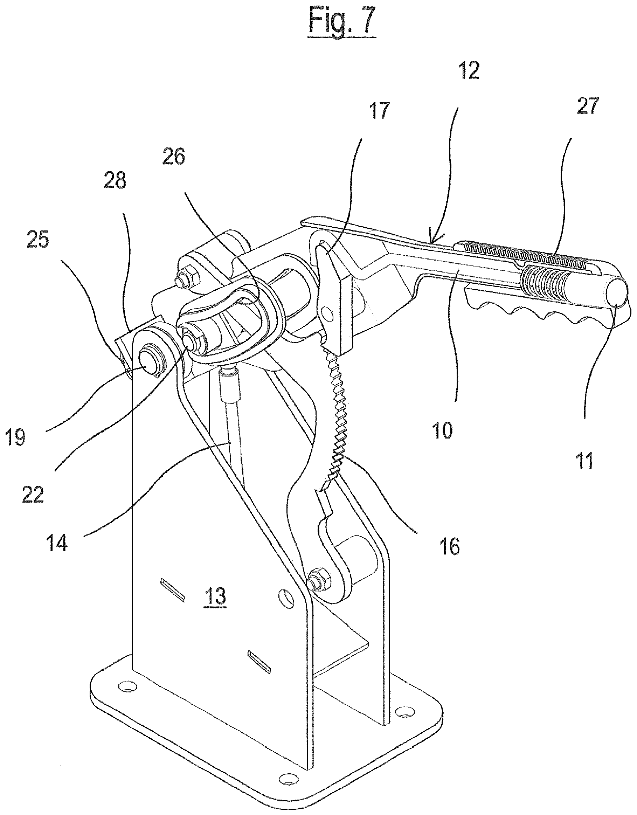

- figure 7 is a perspective view with parts removed as in figure 5, but in an operating position for engaging or blocking the brake or power take-off;

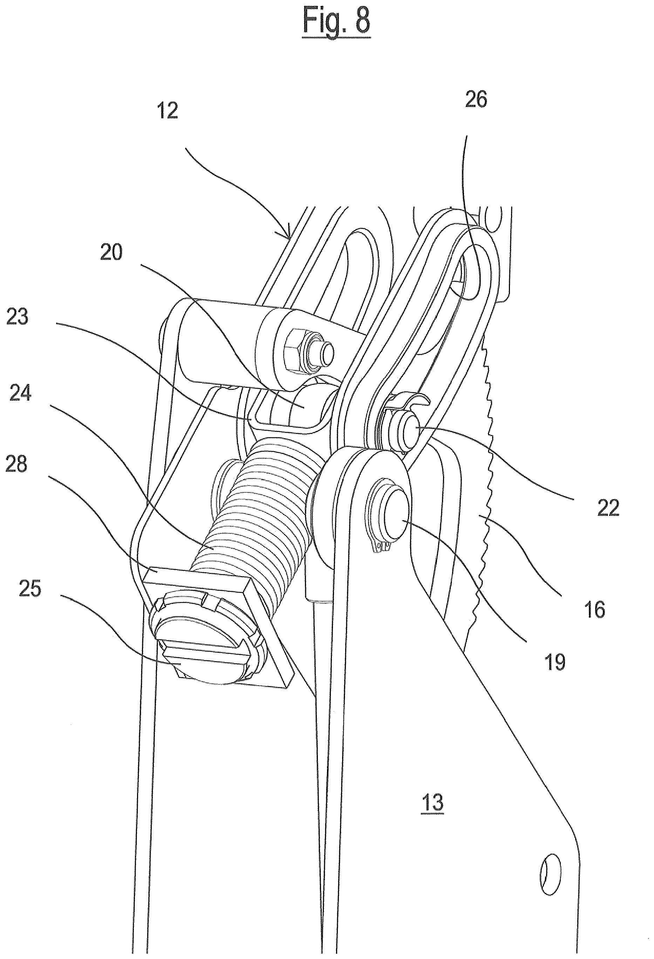

- figure 8 shows in a perspective view, some enlarged parts of the lever of the previous figures in a rotated operating position.

With reference to the enclosed figures, these show an arrangement for a brake control lever or control lever of a power take-off connection according to the present invention.

In particular, the figures show an arrangement for a brake control lever or control lever of a power take-off connection comprising a manual actuation lever 12 hinged at one of its ends by means of a pin 19 to a support 13 which, during use, is bolted firmly to a floor P of a vehicle (not shown).

More specifically, the actuation lever 12 serves as a brake control or as a control for a power take-off (PTO) connection and in general, a cable 14 is connected to the actuation lever 12, contained and sliding in a sheath 15 for the same cable constrained to the support 13.

The actuation lever 12 is in fact rotatable between a rest position and an operating position. In the rest position, the cable 14 is loose or untensioned and the lever is lowered above the underlying support 13. In the rotated operating position for engaging or blocking the brake or engaging the power take-off, the lever is rotated, raised and spaced from the support 13 itself.

In the example shown, the support 13 carries the sheath 15 constrained, near its lower part, while in its upper part it carries the actuation lever 12.

It should also be noted that a device for the relative positioning of the parts is arranged between the actuation lever 12 and the support 13, that can be actuated by means of a release button 11 positioned on the actuation lever 12.

In particular, in this example, the device comprises an arched toothed section 16, constrained on the support 13, with respect to which a ratchet 17 hinged in 18 in an intermediate portion thereof on the actuation lever 12, slides and is engaged. It can be noted that the ratchet 17, by means of the pin 18, can be tilted and disengaged from the arched toothed section 16.

The rotation of the actuation lever 12 around the pin 19 promotes the sliding and/or engagement of the ratchet 17 on the teeth of the toothed section 16 determining the relative position between the actuation lever 12 and the support 13, thanks to the above-mentioned relative positioning device.

The relative positioning device between the lever 12 and support 13 can be operated by a release button 11 situated at the end of a gripping handle 27 arranged on the actuation lever 12. The release button 11 controls a rod 10 which in turn acts on the gripping tooth 17 to determine its engagement-non-engagement with the toothed section 16.

According to the invention, the connection between the actuation lever 12 and cable 14 is obtained by means of a slot 20 (or alternatively by means of a U-shaped fork) hooked to the cable 14. The slot 20 (or alternatively the two ends of the U-shaped fork) contains a hole (not shown) for the passage of a pin 22. On the pin 22, in turn, a U-shaped bracket 23 is also constrained to rotate, on which, in the intermediate part of the sides of the U, one end of a compression spring 24 is blocked. The other end of the compression spring 24 is constrained on a screw head 25, constrained and adjustable, with respect to a box-shaped body 28 of the actuation lever 12.

The screw head extends passing into the box-shaped body 28 and at least partially into the spring 24 guiding its extension and compression movements.

The pin 22 and the U-shaped bracket 23 are positioned free to translate backwards and forwards with respect to at least one slot 26 also formed in the box-shaped body 28 of the actuation lever 12 in a direction according to its development towards the gripping handle 27 according to an axis X of the actuation lever 12.

In the example shown, there are two slots 26 formed on opposite sides with respect to the box-shaped body 28.

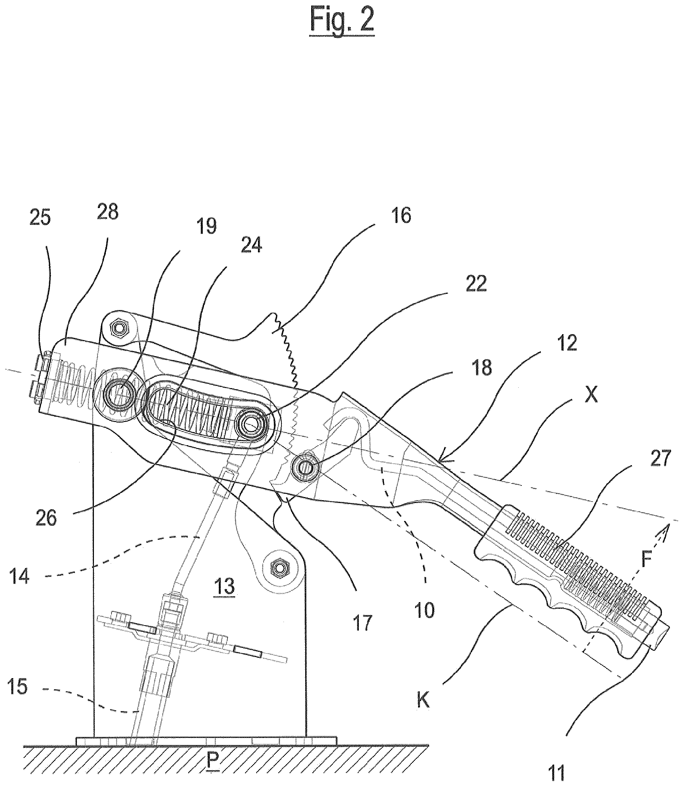

Figures 2 to 4 show the functioning phases of an arrangement for a brake control lever or control lever of a power take-off connection produced according to the present invention.

Figure 2 shows how the parts are arranged together, i.e. it shows how, in the rest position, the actuation lever 12 is rotated and lowered with respect to the underlying support 13. The slot 20 (or, alternatively, the U-shaped fork) acts as a puller of the cable 14 and keeps the cable loose or in any case not in tension in its sheath 15. It can also be observed that the compression spring 24 maintains the U-shaped bracket 23 at the first end of the slot 26. Furthermore, the ratchet 17 is engaged on the teeth of the toothed section 16 in the lower part of the same closest to the floor of the vehicle.

In this rest position (zero point), the actuation lever 12 has the lowest ratio and therefore with the maximum run of the rope 14 in relation to the angular movement of the actuation lever 12.

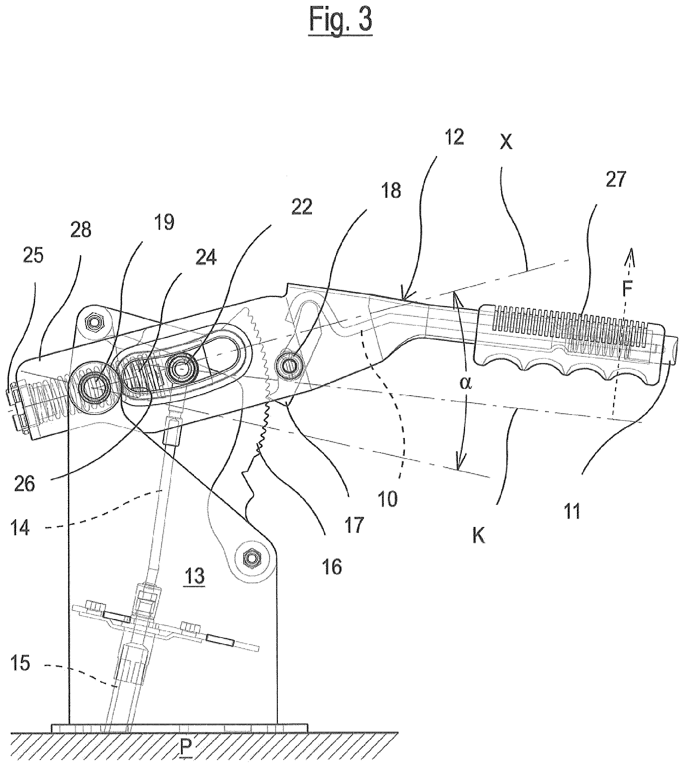

Figure 3 shows how the parts are arranged in a second exemplary position. In this position, the actuation lever 12 has been rotated by an angle α and raised with respect to the rest position, i.e. raised with respect to the underlying support 13. The rotation is enabled by acting on the release button 11 which allows control of the relative positioning device between the lever 12 and support 13 so as to cause the disengagement of the ratchet 17 from the teeth of the toothed section 16. To do this, a user's hand has applied a force F on the handle developing a torque with the lever arm k with respect to said force F, as already indicated, applied through the user's hand on the gripping handle 27.

This lifting of the actuation lever 12 derives from its rotation around the pin 19.

It should also be noted how this rotation causes a lifting of the actuation lever 12 and produces a pull on the cable 14. This pulling, initially light, causes the pin 22 and the U-shaped bracket 23 to start a translation in the slot 26 towards a second end of the slot 26. As already indicated, the slot is formed in the box-shaped body of the actuation lever 12. The U-shaped bracket 23 also drags the slot 20 (or alternatively the U-shaped fork) which acts as a puller on the cable 14 with an initial increase in the load on the same.

This translation causes a slight compression of the pre-loaded compression spring 24, due to the reduced tension on the cable 14, with a slight variation in the ratio.

The lever arm k shows a slight increase with respect to the initial arm due to the slight displacement of the pin 22 and U-shaped bracket 23 in the slot 26.

It can thus be seen that the ratio varies only when the load of the cable 14 increases and this allows the required effect to be always obtained regardless of whether the cable is under tension or has slackened.

In this initial phase with a weak load on the cable, the ratio does not change with a variation in the angle α of the actuation lever 12, but varies with a variation in the load on the cable 14. As can be observed, when the ratio increases, it generates a result that compresses the pre-loaded spring 24 to a certain value.

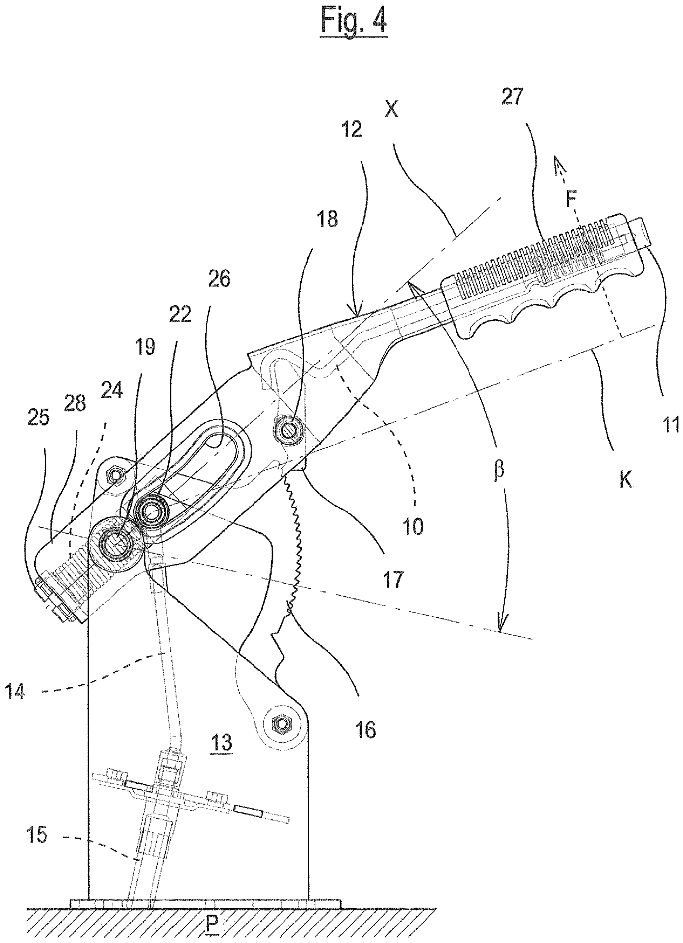

In Figure 4, in fact, it can be seen that by continuing to act on the release button 11 so as to disengage the ratchet 17 from the teeth of the toothed section 16, a further rotation of the actuation lever 12 is enabled.

The actuation lever 12 consequently moves towards the maximum upward rotation allowed, completely rotated and raised by an angle β with respect to the rest position and with respect to the support 13. The actuation lever 12 is therefore arranged in a raised operating position for engaging or blocking the brake or for engaging the power take-off, rotated and spaced from the support 13 itself.

With this rotation action, in fact, the cable 14 acts for blocking the brake or the engagement of the power take-off by developing an increasing reaction up to the maximum shown specifically in figure 4.

In practice, the cable 14 on pulling, retains the U-shaped bracket 23 which in turn entrains the slot 20 (or alternatively the U-shaped fork) directly connected to the cable 14 with an increase in the load. This in turn causes the translation of the pin 22 and the U-shaped bracket 23 in the slot 26 downwards along the axis X. And this translation causes a compression of the pre-loaded compression spring 24 to be developed so that it is almost completely packed.

The pin 22 slides inside said at least one slot 26 towards a second of its ends varying the direction of said cable 14 and causing a pulling of the cable itself with the lifting of the body 28 of said actuation lever 12.

The application point of the force coming from the cable 14 therefore moves towards the pin 19 which allows the rotation of the actuation lever 12 with respect to the support 13.

The application point of the force then moves away from the gripping handle 27 or free end of the actuation lever 12. The lever arm k then increases with respect to the force F applied by the user's hand on the gripping handle facilitating the rotation and/or blocking of the brake or the correct engagement of the power take-off.

The advantage of this system is the variation (increase) in the mechanical advantage only when greater force is required to be applied to the cable and therefore the maximum cable run is maintained until the system is compacted.

The advantage with respect to the known progressive lever systems of the parallelogram, cam or multilink type, is that the variation in the ratio is not fixed according to the lever angle.

According to the present invention, in fact, the ratio only changes when the cable load increases and this allows the required effect to be always obtained regardless of whether the cable is under tension or has slackened.

This arrangement also makes it possible to eliminate elastic elements for the return of the actuation lever 12 to the rest position when the control unit is disengaged and the actuation lever 12 must be rotated again downwards. The presence of the compression spring 24 and any elastic elements of the brake or power take-off connection collaborates in bringing the actuation lever back to this position.

The forms of the structure for providing an arrangement for a brake control lever or control lever of a power take-off connection of the invention, as also the materials and assembly modes, can naturally differ from those shown by way of non-limiting example in the drawings.

The objective mentioned in the preamble of the description has therefore been achieved.

The protection scope of the present invention is defined by the enclosed claims.

## Claims

1. An arrangement for a brake control lever or control lever of a power take-off connection comprising an actuation lever (12) rotatable by means of a pin (19) with respect to a support (13), that can be positioned on a motor vehicle, wherein a relative positioning device is positioned between said actuation lever (12) and said support (13), that can be actuated by means of a release button (11) positioned on said actuation lever (12), an end of a control cable (14) of a brake or power take-off connection being constrained by means of a further pin (22) to said actuation lever (12), said actuation lever (12) being rotatable between a rest position, lowered with respect to the underlying support (13) and wherein the cable (14) is loose or untensioned, and an operative engagement or blocking position of the brake or power take-off connection, rotated, raised and spaced from the support (13), wherein said further pin (22), positioned at said end of said cable (14), can be moved backwards and forwards within at least one slot (26) of a body (28) of said actuation lever (12) in opposition to a preloaded elastic element (24) when a force is applied by means of said cable (14), **characterized in that** said further pin (22) being positioned at a first end of said at least one slot (26) with said pre-loaded elastic element (24) at rest and said force only being established when said actuation lever (12) has been moved from said lowered rest position to said rotated raised operative engagement or blocking position of the brake or power take-off connection, wherein said further pin (22) slides inside said at least one slot (26) towards a second of its ends varying the direction of said cable (14) and causing a pulling of the cable itself with the lifting of the body (28) of said actuation lever (12).

2. The arrangement according to claim 1, **characterized in that** said actuation lever (12) comprises a box-shaped body (28) in which said preloaded elastic element (24) is positioned.

3. The arrangement according to claim 1 or 2, **characterized in that** said preloaded elastic element is in the form of a compression spring (24).

4. The arrangement according to claim 2, **characterized in that** said preloaded elastic element (24) is constrained at a first end to a U-shaped bracket (23) positioned on said pin (22) and is constrained at the other end with respect to said box-shaped body (28) of the actuation lever (12).

5. The arrangement according to claim 4, **characterized in that** said other end of said preloaded elastic element (24) is constrained to said box-shaped body (28) of the actuation lever (12) by means of a screw head (25) which extends passing into the box-shaped body (28) and at least partially into said preloaded elastic element (24), guiding it in its extension and compression movements.

6. The arrangement according to claim 1, **characterized in that** said relative positioning device that can be actuated by means of a release button (11) positioned on said actuation lever (12) comprises an arched toothed section (16), constrained to said support (13), with respect to which a ratchet (17), hinged (in 18) in its intermediate portion on said actuation lever (12), slides and is engaged.

7. The arrangement according to one or more of the previous claims, **characterized in that** said actuation lever (12) comprises a box-shaped body (28) which provides two slots (26) formed on opposite sides with respect to said box-shaped body (28).

## Patentansprüche

1. Anordnung für einen Bremssteuerhebel oder Steuerhebel einer Power Take-Off-Verbindung umfassend einen Betätigungshebel (12), der mittels eines Bolzens (19) gegenüber einem Träger (13) drehbar ist, der an einem Kraftfahrzeug positioniert sein kann, wobei zwischen dem besagten Betätigungshebel (12) und dem besagten Träger (13) eine Relativpositioniereinrichtung angeordnet ist, die mittels eines an dem besagten Betätigungshebel (12) angeordneten Auslöseknopfes (11) betätigt werden kann, ein Ende eines Steuerkabels (14) einer Bremse oder Power Take-Off-Verbindung mittels eines weiteren Bolzens (22) an dem besagten Betätigungshebel (12) gehalten ist, wobei der besagte Betätigungshebel (12) zwischen einer Ruhestellung, in der er in Bezug auf den darunter liegenden Träger (13) abgesenkt ist und wobei das Kabel (14) lose oder ungespannt ist, und einer operativen Eingriffs- oder Blockierstellung der Bremse oder Power Take-Off-Verbindung drehbar ist, gedreht, angehoben und von dem Träger (13) beabstandet, wobei der besagte weitere Bolzen (22), der an dem besagten Ende des besagten Kabels (14) positioniert ist, innerhalb mindestens eines Schlitzes (26) eines Körpers (28) des besagten Betätigungshebels (12) gegen ein vorgespanntes elastisches Element (24) rückwärts und vorwärts bewegt werden kann, wenn mittels des besagten Kabels (14) eine Kraft aufgebracht wird, **dadurch gekennzeichnet, dass** der besagte weitere Bolzen (22) an einem ersten Ende des besagten mindestens einen Schlitzes (26) positioniert ist, wobei sich das besagte vorgespannte elastische Element (24) in Ruhestellung befindet und die besagte Kraft nur dann aufgebaut wird, wenn der besagte Betätigungshebel (12) aus der besagten abgesenkten Ruhestellung in die besagte gedrehte, angehobene Eingriffs- oder Blockierstellung der Bremse oder Power Take-Off-Verbindung bewegt worden ist, wobei der besagte weitere Bolzen (22) innerhalb des besagten mindestens einen Schlitzes (26) in Richtung eines zweiten seiner Enden gleitet, wobei die Richtung des besagten Kabels (14) verändert wird und ein Ziehen des Kabels selbst mit dem Anheben des Körpers (28) des besagten Betätigungshebels (12) bewirkt wird.

2. Anordnung nach Anspruch 1, **dadurch gekennzeichnet, dass** der besagte Betätigungshebel (12) einen kastenförmigen Körper (28) aufweist, in welchem das besagte vorgespannte elastische Element (24) angeordnet ist.

3. Anordnung nach Anspruch 1 oder 2, **dadurch gekennzeichnet, dass** das besagte vorgespannte elastische Element in Form einer Druckfeder (24) ausgebildet ist.

4. Anordnung nach Anspruch 2, **dadurch gekennzeichnet, dass** das besagte vorgespannte elastische Element (24) an einem ersten Ende an einem U-förmigen Bügel (23) gehalten ist, der auf dem besagten Bolzen (22) angeordnet ist, und an dem anderen Ende in Bezug auf den besagten kastenförmigen Körper (28) des Betätigungshebels (12) gehalten ist.

5. Anordnung nach Anspruch 4, **dadurch gekennzeichnet, dass** das besagte andere Ende des besagten vorgespannten elastischen Elements (24) an dem besagten kastenförmigen Körper (28) des Betätigungshebels (12) mittels eines Schraubenkopfes (25) gehalten ist, welcher sich durchgehend in den kastenförmigen Körper (28) und zumindest teilweise in das besagte vorgespannte elastische Element (24) erstreckt, wobei dieses bei seinen Ausdehnungs- und Kompressionsbewegungen geführt ist.

6. Anordnung nach Anspruch 1, **dadurch gekennzeichnet, dass** die besagte Relativpositioniereinrichtung, die mittels eines an dem besagten Betätigungshebel (12) angeordneten Auslöseknopfes (11) betätigt werden kann, einen bogenförmigen, gezahnten Abschnitt (16) umfasst, der an dem besagten Träger (13) gehalten ist, in Bezug auf welchen eine Ratsche (17), die in ihrem Zwischenbereich an dem besagten Betätigungshebel (12) angelenkt ist (in 18), gleitet und in Eingriff ist.

7. Anordnung nach einem oder mehreren der vorhergehenden Ansprüche, **dadurch gekennzeichnet, dass** der besagte Betätigungshebel (12) einen kastenförmigen Körper (28) umfasst, welcher zwei Schlitze (26) bereitstellt, die auf gegenüberliegenden Seiten in Bezug auf den besagten kastenförmigen Körper (28) ausgebildet sind.

## Revendications

1. Agencement pour un levier de commande de frein ou levier de commande d'une liaison de prise de force comprenant un levier d'actionnement (12) pouvant tourner à l'aide d'une broche (19) par rapport à un support (13), qui peut être positionné sur un véhicule à moteur, dans lequel un dispositif de positionnement relatif est positionné entre ledit levier d'actionnement (12) et ledit support (13), qui peut être actionné à l'aide d'un bouton de libération (11) positionné sur ledit levier d'actionnement (12), une extrémité d'un câble de commande (14) d'un frein ou d'une liaison de prise de force étant contrainte à l'aide d'une autre broche (22) sur ledit levier d'actionnement (12), ledit levier d'actionnement (12) pouvant tourner entre une position de repos, abaissée par rapport au support sous-jacent (13) et dans laquelle le câble (14) est lâche ou non tendu, et une position de blocage ou de mise en prise fonctionnelle du frein ou de la liaison de prise de force, tournée, élevée et espacée par rapport au support (13), dans laquelle ladite autre broche (22), positionnée au niveau de ladite extrémité dudit câble (14), peut être déplacée vers l'arrière et vers l'avant dans au moins une fente (26) d'un corps (28) dudit levier d'actionnement (12) en opposition à un élément élastique préchargé (24) lorsqu'une force est appliquée à l'aide dudit câble (14), **caractérisé en ce que** ladite autre broche (22) est positionnée au niveau d'une première extrémité de ladite au moins une fente (26) avec ledit élément élastique préchargé (24) au repos et ladite force étant seulement établie lorsque ledit levier d'actionnement (12) a été déplacé de ladite position de repos abaissée à ladite position de blocage ou de mise en prise fonctionnelle élevée tournée du frein ou de la liaison de prise de force, dans laquelle ladite autre broche (22) coulisse à l'intérieur de ladite au moins une fente (26) vers une seconde de ses extrémités faisant varier la direction dudit câble (14) et provoquant une traction du câble lui-même avec le levage du corps (28) dudit levier d'actionnement (12).

2. Agencement selon la revendication 1, **caractérisé en ce que** ledit levier d'actionnement (12) comprend un corps en forme de boîte (28) dans lequel est positionné ledit élément élastique préchargé (24).

3. Agencement selon la revendication 1 ou 2, **caractérisé en ce que** ledit élément élastique préchargé se présente sous la forme d'un ressort de compression (24).

4. Agencement selon la revendication 2, **caractérisé en ce que** ledit élément élastique préchargé (24) est contraint au niveau d'une première extrémité sur une équerre en forme de U (23) positionnée sur ladite broche (22) et est contraint au niveau de l'autre extrémité par rapport audit corps en forme de boîte (28) du levier d'actionnement (12).

5. Agencement selon la revendication 4, **caractérisé en ce que** ladite autre extrémité dudit élément élastique préchargé (24) est contrainte sur ledit corps en forme de boîte (28) du levier d'actionnement (12) à l'aide d'une tête de vis (25) qui s'étend en passant dans le corps en forme de boîte (28) et au moins partiellement dans ledit élément élastique préchargé (24), la guidant dans ses déplacements d'extension et de compression.

6. Agencement selon la revendication 1, **caractérisé en ce que** ledit dispositif de positionnement relatif qui peut être actionné à l'aide d'un bouton de libération (11) positionné sur ledit levier d'actionnement (12) comprend une section dentée arquée (16), contrainte sur ledit support (13), par rapport à laquelle un cliquet (17), articulé (en 18) dans sa position intermédiaire sur ledit levier d'actionnement (12), coulisse et est mis en prise.

7. Agencement selon une ou plusieurs des revendications précédentes, **caractérisé en ce que** ledit levier d'actionnement (12) comprend un corps en forme de boîte (28) qui fournit deux fentes (26) formées sur des côtés opposés par rapport audit corps en forme de boîte (28).
